**Europäisches Patentamt**

**European Patent Office**

**Office européen des brevets**

(19)

(11) Veröffentlichungsnummer: **0 114 620**
A2

(12) # EUROPÄISCHE PATENTANMELDUNG

(21) Anmeldenummer: **84100291.8**

(22) Anmeldetag: **12.01.84**

(51) Int. Cl.³: **B 29 F 3/00**

(30) Priorität: **19.01.83 DE 3301635**

(43) Veröffentlichungstag der Anmeldung:
**01.08.84 Patentblatt 84/31**

(84) Benannte Vertragsstaaten:
**AT BE CH DE FR GB IT LI LU NL SE**

(71) Anmelder: **SIEMENS AKTIENGESELLSCHAFT**
**Berlin und München Wittelsbacherplatz 2**
**D-8000 München 2(DE)**

(72) Erfinder: **Von Tomkewitsch, Sybille**
**Hochfeld 14**
**D-8134 Pöcking(DE)**

(72) Erfinder: **Schmidt, Hans-Friedrich, Dr.**
**Graf-Tattenbachweg 3**
**D-8196 Eurasburg(DE)**

(54) **Herstellung von leitfähigen Kunststoffen.**

(57) Zur Herstellung von leitfähigen Kunststoffen werden die Dosierungsverhältnisse bisher gravimetrisch oder volumetrisch festgelegt. Nach der Erfindung regelt man in Abhängigkeit eines am Extrudat gemessenen elektrischen Wertes die Dosierungsverhältnisse.

EP 0 114 620 A2

SIEMENS AKTIENGESELLSCHAFT          Unser Zeichen
Berlin und München                  VPA 83 P 1010 E

## Herstellung von leitfähigen Kunststoffen.

Die Erfindung betrifft ein Verfahren zur Herstellung von leitfähigen Kunststoffen aus mehreren Komponenten mit geringen Leitfähigkeitstoleranzen, zum Beispiel durch Zusetzen von langkettigem Leitruß.

Es ist bekannt, Kunststoffe mit Hilfe von leitfähigen Zusätzen zu versehen, um unter anderem antistatische Teile herzustellen. Zu diesem Zweck wird dem Kunststoff zum Beispiel Ruß in einem bestimmten Verhältnis zugemischt. Je nach dem Anwendungszweck ist der geforderte Oberflächen- bzw. Durchgangswiderstand verschieden. Oberflächenwiderstände oberhalb $10^{10}$ und unterhalb $10^4 \, \Omega / \square$ sind durch eine festgelegte Rezeptur erreichbar. In dem dazwischen liegenden Bereich ist es aber nicht mehr möglich, mit einer festen Rezeptur zu arbeiten, weil geringe Unterschiede in der Qualität der Komponenten sowie Schwankungen in den Extrusionsbedingungen zu unzulässigen Toleranzen führen.

Die Dosierungsverhältnisse werden bisher gravimetrisch oder volumetrisch festgelegt. Dabei ist aber nachteilig, daß die Eigenschaften der Komponenten unberücksichtigt bleiben und somit das Endergebnis stark variiert. Das hängt zum Beispiel von der Leitfähigkeit und gegebenenfalls von der Verteilung der Teilchengröße des Rußes ab.

Es gibt zur Zeit noch keine Möglichkeit, die Leitfähigkeit des Rußes bei der Dosierung zu messen und für die Regelung zu verwenden. Bisher wurde, wie bereits ausge-

Wed 1 Plr/16.12.1982

führt, gravimetrisch dosiert und erst an den fertigen Spritzgußteilen die Qualität des Materials überprüft.

In der DE-OS 28 38 110 ist eine Vorrichtung zur Dosierung mehrerer Einzelsubstanzen einer für die Verarbeitung in einem Extruder bestimmten Mischcharge beschrieben und dargestellt. Dabei wird analog einer Differenzregelung ein hohes Maß an Genauigkeit in Bezug auf die Temperatur und Viskosität des extrudierten Materials erreicht.

Der Erfindung liegt die Aufgabe zugrunde, ein Verfahren zu entwickeln, mit dem es möglich ist, Kunststoffe mit im engen Bereich festgelegten elektrischen Eigenschaftswerten herzustellen, wie zum Beispiel Kunststoffe mit einem Oberflächenwiderstand von ca. $10^{10}$ $\Omega$ /□ und einer Entladungszeit von 5000 auf ca. 0 Volt in $<$ 100 ms. Das wird nach der Erfindung dadurch erreicht, daß in Abhängigkeit eines am Extrudat gemessenen elektrischen Wertes die Dosierungsverhältnisse geregelt werden. Als elektrischer Wert ist Oberflächen- oder Durchgangswiderstand zu verstehen.

Das Verfahren nach der Erfindung hat den Vorteil, daß zum Beispiel die Rußeigenschaften und die Dispergierungseinflüsse im Extruder eliminiert werden. Die Dispergierung wird beeinflußt durch Temperatur, Schneckengeometrie, Drehzahl und Durchsatzleistung. Das Verfahren nach der Erfindung macht unabhängig von der Extruderart und von einer festgelegten Rezeptur.

Zur Erzielung dieses Effektes kann die Leitfähigkeitskomponente oder die Kunststoffkomponente variiert werden. Vorzugsweise wird die Leitfähigkeitskomponente in Abhängigkeit des gemessenen Ergebnisses variiert, um die Durchsatzmenge konstant zu halten.

Durch die definierte Zugabe von Zusatzstoffen, wie zum

Beispiel Mineral, ist eine bessere Dispergierung zu erreichen. Das ermöglicht die Einhaltung von Oberflächenwiderständen innerhalb einer Zenerpotenz.

Das Verfahren nach der Erfindung eignet sich besonders zur Herstellung eines leitfähigen Kunststoffes mit hohem Oberflächenwiderstand und einer Entladungszeit von 5000 auf ca. 0 Volt in $<$ 100 ms nach Anspruch 1, in dem zum Beispiel ein Polyamid mit 30 % Mineral und 4 bis 6 % eines speziellen langkettigen Leitrußes in einen Extruder gemischt werden.

5 Patentansprüche

<u>Patentansprüche</u>

1. Verfahren zur Herstellung von leitfähigen Kunststoffen aus mehreren Komponenten mit geringen Leitfähigkeitstoleranzen, zum Beispiel durch Zusetzen von langkettigem Leitruß, d a d u r c h   g e k e n n z e i c h n e t , daß in Abhängigkeit eines am Extrudat gemessenen elektrischen Wertes die Dosierungsverhältnisse geregelt werden.

2. Verfahren nach Anspruch 1, d a d u r c h   g e -k e n n z e i c h n e t ,   daß die Leitfähigkeitskomponente geregelt wird.

3. Verfahren nach Anspruch 1, d a d u r c h   g e -k e n n z e i c h n e t , daß die Kunststoffkomponente geregelt wird.

4. Verfahren nach Anspruch 1, d a d u r c h   g e -k e n n z e i c h n e t , daß eine definierte Zugabe von Zusatzstoffen, wie zum Beispiel Mineral, zur besseren Dispergierung der leitfähigen Komponente verwendet wird.

5. Verfahren zur Herstellung eines leitfähigen Kunststoffes mit hohem Oberflächenwiderstand und einer Entladungszeit von 5000 auf ca. 0 Volt in $<$ 100 ms nach Anspruch 1, d a d u r c h   g e k e n n z e i c h n e t , daß zum Beispiel ein Polyamid mit 30 % Mineral und mit 4 bis 6 % eines speziellen langkettigen Leitrußes in einem Extruder gemischt werden.